# FASCICULE DE BREVET EUROPEEN

(11) **EP 2 653 282 B1**
(45) Date de publication et mention de la délivrance du brevet: **05.09.2018**
(21) Numéro de dépôt: 13354014.6
(22) Date de dépôt: 19.04.2013
(51) Int. Cl.: B29L 31/00, B29K 33/00, B29K 55/02, B29C 47/00, B29C 47/06, B29C 47/32, B29C 47/88, B29C 47/92, B32B 37/00, B32B 37/22, B32B 38/00, B32B 38/12, B29C 43/28, B32B 37/15

(54) **Procédé de fabrication d'une feuille d'un matériau composite et feuille de matériau composite**
Verfahren zur Herstellung einer Verbundmaterialfolie und Verbundmaterialfolie
Method for producing a sheet of composite material and composite material sheet

(30) Priorité: 20.04.2012 FR 1201172
(43) Date de publication de la demande: 23.10.2013
(73) Titulaire: New Bath, 38340 Voreppe (FR)
(72) Inventeur: Aubourg, Désiré, 10150 Pont-Sainte-Marie (FR)
(74) Mandataire: Talbot, Alexandre

(56) Documents cités:
- EP-B1- 1 028 840
- WO-A1-2006/085342
- FR-A1- 2 661 364
- FR-A1- 2 716 102
- GB-A- 2 080 199

## Description

### Domaine technique de l'invention.

La présente invention relève du domaine des procédés de façonnage ou d'assemblage des matières plastiques. Parmi ces procédés, la présente invention relève plus particulièrement des procédés de moulage par pressage et calandrage des matières plastiques. Elle a pour objet un procédé de fabrication d'une feuille d'un matériau composite. Elle a aussi pour objet une feuille de matériau composite obtenue à partir de la mise en oeuvre d'un tel procédé.

### Etat de la technique.

Le document FR 2,661,364 (Technoplast) décrit un procédé de fabrication d'une feuille d'un matériau composite. Cette dernière est destinée à former au moins partiellement une baignoire. Le matériau composite comprend une plaque d'un polyméthacrylate de méthyle qui est préfabriquée par coulée pour constituer une couche externe du matériau composite. Le matériau composite comprend aussi une couche support formée d'une matière thermoplastique, tel qu'un polyacrylonitrile-butadiène-styrène, qui est destinée à constituer une couche interne du matériau composite.

Plus particulièrement, selon le procédé décrit par FR 2,661,364, on alimente par une extrudeuse des rouleaux d'une machine de calandrage de façon à former une feuille continue extrudée de matière thermoplastique, on approvisionne régulièrement à l'entrée de la machine de calandrage, d'un côté de la feuille de matière thermoplastique formée, des plaques de polyméthacrylate de méthyle qui sont calandrées simultanément avec la feuille de matière thermoplastique entre les rouleaux de la machine de calandrage, puis on découpe à la sortie de la machine de calandrage la feuille de matériau composite ainsi obtenue.

Un tel procédé présente l'inconvénient de ne pas permettre une obtention de feuille de matière composite comportant une épaisseur importante, notamment supérieure à 10 mm, sauf à disposer d'une machine de calandrage complexe et couteuse ce qui est rédhibitoire. De plus, un tel procédé ne permet pas d'obtenir une feuille de matériau composite de conformation quelconque, et comprenant notamment une zone comportant un faible rayon de courbure, par exemple inférieur à 5 mm.

Par ailleurs, il est connu dans le domaine de la fabrication des objets sanitaires, tels qu'une baignoire, d'obtenir une feuille d'un matériau composite à partir d'une plaque de polyméthacrylate de méthyle qui est coulée, puis qui est revêtue d'une couche primaire d'accrochage pour la réception d'une couche de polyuréthane projeté. Ce dernier est obtenu à partir d'une réaction de polymérisation d'un polyisocyanate et d'un polyol.

Or, une telle réaction de polymérisation est exothermique, de telle sorte que la projection du polyuréthane tend à déformer la plaque de polyméthacrylate de méthyle. Une telle déformation altère une qualité du matériau composite, ce qui provoque une mise au rebut d'une quantité importante de pièces. De plus, l'application de la couche primaire d'accrochage ralentit le procédé de fabrication, ce qu'il est souhaitable d'éviter.

On sait d'autre part qu'une éventuelle projection directe de polyuréthane PU sur une couche d'acrylique PMMA coulée, ne permettrait pas d'obtenir une cohésion suffisante..

Le brevet FR2716102 concerne un procédé de réalisation d'une structure de baignoire, qui consiste à thermoformer une plaque en acrylique, puis à appliquer une couche de polyester armé de fibres de verre pour la résistance mécanique, puis après polymérisation, à projeter sur le polyester, une mousse de polyuréthane. On note que l'accrochage est obtenu grâce à la présence de la couche intermédiaire de polyester. La mise en place de cette couche intermédiaire de polyester complique la fabrication.

Le document US 5 069 851 décrit un dispositif de fabrication d'une feuille de matériau, ayant une machine de calandrage, des moyens de découpe et de chauffage, un moule de thermoformage, et une étuve.

### Objet de l'invention.

Un but de la présente invention est de proposer un procédé de fabrication d'une feuille d'un matériau composite, qui soit simple, rapide, fiable, peu couteux et écologique, une telle feuille de matériau composite étant susceptible d'être d'une épaisseur importante, par exemple d'une épaisseur supérieure à 10 mm, la feuille de matériau composite étant susceptible de comporter des zones courbes d'un rayon de courbure le plus petit possible, notamment inférieur à 5 mm. Un autre but de la présente invention est de proposer une feuille de matière plastique, obtenue à partir de la mise en oeuvre d'un tel procédé, qui soit résistante, robuste et thermiquement isolante.

Un procédé de la présente invention est un procédé de fabrication d'une feuille de matériau composite. Le procédé comprend une étape d'extrusion d'un matériau thermoplastique à une température d'extrusion, puis une étape de calandrage d'une plaque de polyméthacrylate de méthyle coulée et du matériau thermoplastique par une machine de calandrage.

Selon la présente invention, le procédé comprend une étape de projection d'une mousse de polyuréthane sur le matériau thermoplastique extrudé qui est effectuée en une zone de délivrance de la machine de calandrage. Cette projection de polyuréthane est opérée sans nécessiter de primaire d'accrochage.

L'adhésion des trois matériaux s'effectue en deux phases :
- application par calandrage de la plaque d'acrylique PMMA coulée sur la feuille thermoplastique extrudée en continue,
- après thermoformage, projection de polyuréthane sur la feuille thermoplastique extrudée.

L'adhésion est assurée en surface de la couche de PPMA coulé grâce à la couche thermoplastique, par exemple de l'ABS.

L'enseignement du document FR 2716102 ne suggère pas à appliquer le polyuréthane sur une plaque extrudée de matière thermoplastique ABS, calandrée avec une plaque d'acrylique PPMA coulé.

De préférence, le procédé comprend une étape de préchauffage des plaques de polyméthacrylate de méthyle à une température de préchauffage préalablement à un approvisionnement en plaques de polyméthacrylate de méthyle de la machine de calandrage.

Le procédé comprend avantageusement une étape de découpe de la feuille de matériau composite qui est réalisée préalablement à l'étape de projection.

Le procédé comprend avantageusement une étape de chauffage de la feuille de matériau composite à une température de chauffe, l'étape de chauffage étant postérieure à l'étape de découpe et antérieure à l'étape de projection.

Le procédé comprend avantageusement une étape de thermoformage de la feuille de matériau composite qui est postérieure à l'étape de chauffage et antérieure à l'étape de projection.

Le procédé comprend avantageusement une étape d'étuvage de la feuille de matériau composite à une température d'étuve, l'étape d'étuvage étant postérieure à l'étape de thermoformage et antérieure à l'étape de projection.

Une feuille de matériau composite est obtenue directement à partir du procédé précité, et est principalement reconnaissable en ce que la feuille de matériau composite comprend une couche de matériau thermoplastique qui est interposée entre une plaque de polyméthacrylate de méthyle et une mousse de polyuréthane, laquelle est obtenue par un mélange d'un polyisocyanate et d'un polyol. La somme d'une première épaisseur élémentaire de la plaque de polyméthacrylate de méthyle et d'une deuxième épaisseur élémentaire de matériau thermoplastique est inférieure à une troisième épaisseur élémentaire de la mousse de polyuréthane.

### Description des figures.

D'autres caractéristiques et avantages de la présente invention apparaîtront à la lecture de la description qui va en être faite d'exemples de réalisation, en relation avec les figures des planches annexées, dans lesquelles :
La figure 1 est une vue schématique d'un dispositif pour la mise en oeuvre d'un procédé de fabrication d'une feuille d'un matériau composite selon la présente invention.
La figure 2 est une vue schématique en coupe d'une feuille de matériau composite obtenue à partir du dispositif illustré sur la figure précédente.
La figure 3 est une vue schématique d'étapes successives que comporte le procédé de réalisation de la présente invention.

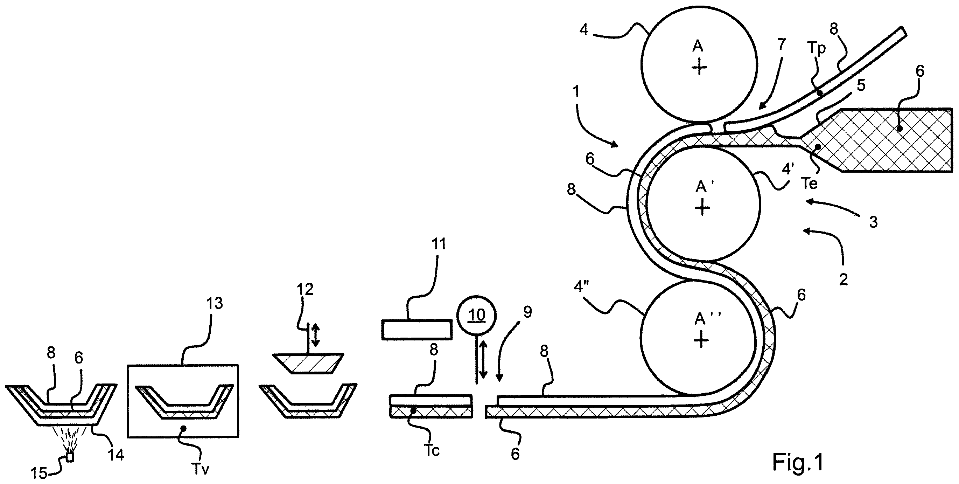

Sur la figure 1, une feuille 1 d'un matériau composite est obtenue à partir d'un dispositif 2 pour la mise en oeuvre d'un procédé de la présente invention. Le dispositif 2 comprend une machine 3 de calandrage qui comporte une pluralité de rouleaux 4,4',4" de calandrage. Les axes de rotation respectifs A, A', A" des rouleaux 4,4',4" de calandrage sont préférentiellement alignés et superposés les uns aux autres pour le calandrage de la feuille 1 de matériau composite. Le dispositif 1 comprend aussi une buse 5 d'extrusion d'un matériau thermoplastique 6. Ce dernier est délivré en une zone d'approvisionnement 7 ménagée entre un premier rouleau 4 et un deuxième rouleau 4' de la machine 3 de calandrage. Des plaques 8 de polyméthacrylate de méthyle sont également délivrées en la zone d'approvisionnement 7, de telle sorte que le matériau thermoplastique 6 et les plaques 8 de polyméthacrylate de méthyle sont assemblés en continu l'un à l'autre par calandrage.

Les plaques 8 de polyméthacrylate de méthyle sont préformées par coulage préalablement à l'opération de calandrage et sont préférentiellement préchauffées à une température de préchauffage Tₚ qui est de l'ordre de 80°C, à plus ou moins 10% près. Le matériau thermoplastique 6 quant à lui est extrudé à une température d'extrusion Tₑ qui est de l'ordre de 240°C, à plus ou moins 10% près, de telle sorte que le matériau thermoplastique 6 est délivrée sous forme fluide, notamment pâteuse, pour faciliter le calandrage et l'assemblage avec les plaques 8 de polyméthacrylate de méthyle. Le matériau thermoplastique 6 est par exemple du polyacrylonitrile-butadiène-styrène.

Le dispositif 2 comprend une zone de délivrance 9 de la feuille 1 de matière plastique, la zone de délivrance 9 étant située en sortie des rouleaux 4,4',4" de calandrage. La zone de délivrance 9 est pourvue de moyens de découpe 10 pour mettre en dimension souhaitée la feuille 1 de matériau composite. La zone de délivrance 9 est aussi pourvue de moyens de chauffage 11, tels qu'un panneau de chauffe ou analogue, pour porter la feuille 1 de matériau composite à une température de chauffe T_{c}, qui est de l'ordre de 160°C, à plus ou moins 10% près.

La feuille 1 de matériau composite est ensuite thermoformée pour être mise en une forme désirée, notamment celle d'une baignoire, d'un receveur de douche ou celle de toute pièce sanitaire analogue. Le thermoformage de la feuille 1 de matériau composite est par exemple obtenu à l'aide d'un moule de thermoformage 12.

La feuille 1 de matériau composite est ensuite placée à l'intérieur d'une étuve 13 pour être portée à une température d'étuve Tᵥ de l'ordre de 50°C, à plus ou moins 10% près.

La feuille 1 de matériau composite est ensuite avantageusement revêtue d'une mousse de polyuréthane 14 qui est projetée sur le matériau thermoplastique 6 à l'aide de moyens de projection 15, tel qu'un pistolet mélangeur 15. Le polyuréthane projeté est par exemple obtenu à partir d'un mélange d'un polyisocyanate et d'un polyol qui polymérise sur le matériau thermoplastique 6. Ce dernier constitue avantageusement un écran thermique qui empêche une chauffe importante de la plaque 8 de polyméthacrylate de méthyle, malgré le caractère exothermique de la réaction de polymérisation du polyisocyanate et du polyol. Le matériau thermoplastique 6 constitue une couche intermédiaire qui permet une adhérence de la mousse de polyuréthane 14 sur la plaque 8 de polyméthacrylate de méthyle.

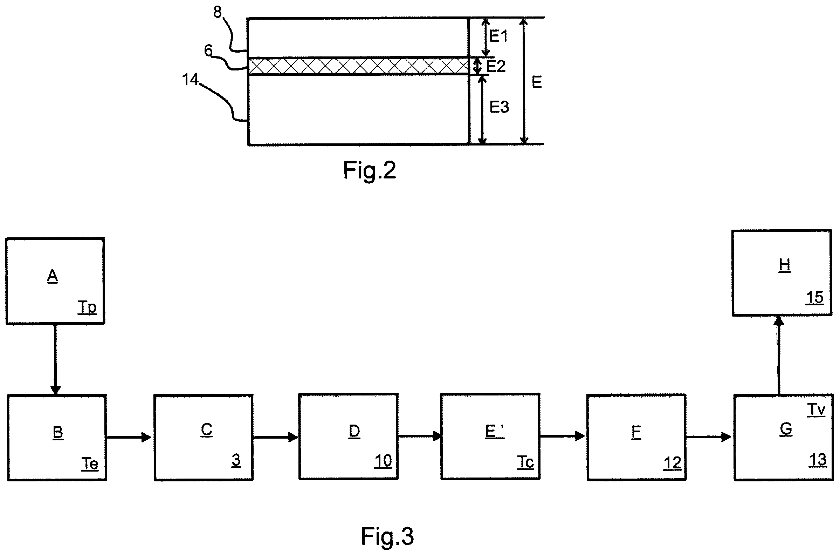

L'ensemble de ces dispositions est tel que la feuille 1 de matériau composite ainsi obtenue à l'issue de procédé de la présente invention est légère et rigide en comparaison des feuilles de matériau composite de l'art antérieur. De plus, en se reportant sur la figure 2, une feuille 1 de matériau composite de la présente invention comporte une épaisseur totale E qui est par exemple supérieure à 10 mm, ce qui est plus important qu'une épaisseur habituelle de feuille de l'art antérieur. Par ailleurs, le procédé de la présente invention présente l'avantage de ne pas utiliser de résine à base de styrène en comparaison de feuille de matériau composite de l'art antérieur. Par ailleurs encore, une feuille 1 de matériau composite de la présente invention comporte une conductivité thermique inférieure à celle d'une feuille de l'art antérieur, ce qui permet de conserver avantageusement une température optimisée d'une eau contenue à l'intérieur de la baignoire. De plus, l'épaisseur totale E de la feuille 1 de matière plastique est modulable à partir d'une modification relative d'une première épaisseur élémentaire E1 de la plaque 8 de polyméthacrylate de méthyle, d'une deuxième épaisseur E2 du matériau thermoplastique 6 et d'une troisième épaisseur élémentaire E3 de la mousse de polyuréthane 14. Il est notamment possible de réguler la deuxième épaisseur élémentaire E2 et la troisième épaisseur élémentaire E3 pour obtenir une épaisseur totale E souhaitée constante. Enfin, le matériau thermoplastique 6 est susceptible d'être issu d'un recyclage de matières plastiques, ce qui confère à la feuille 1 de matériau composite ainsi obtenue un caractère écologique.

A titre d'exemple non limitatif, une première épaisseur élémentaire E1 est par exemple de l'ordre de 3,2 mm, voire supérieure à 3,2 mm, une deuxième épaisseur élémentaire E2 est par exemple de l'ordre de 1 mm, voire supérieure à 1 mm, et la troisième épaisseur élémentaire E3 est susceptible d'être de l'ordre de 6 mm, voire supérieure à 6 mm, de telle sorte l'épaisseur totale E est susceptible d'être supérieure à 10 mm.

En se reportant sur la figure 3, le procédé de la présente invention comprend une pluralité d'étapes successives dont :
- Une étape de préchauffage A des plaques 8 de polyméthacrylate de méthyle à la température de préchauffage Tₚ,
- Une étape d'extrusion B du matériau thermoplastique 6 à la température d'extrusion Tₑ,
- Une étape de calandrage C des plaques 8 de polyméthacrylate de méthyle et du matériau thermoplastique 6,
- Une étape de découpe D de la feuille 1 de matériau composite,
- Une étape de chauffage E' de la feuille 1 de matériau composite à la température de chauffe T_{c},
- Une étape de thermoformage F de la feuille 1 de matériau composite,
- Une étape d'étuvage G de la feuille 1 de matériau composite à la température d'étuve Tᵥ,
- Une étape de projection H de mousse de polyuréthane 14 sur le matériau thermoplastique 6.

## Revendications

1. Procédé de fabrication d'une feuille (1) de matériau composite, le procédé comprenant une étape d'extrusion (B) d'un matériau thermoplastique (6) à une température d'extrusion (Tₑ), puis une étape de calandrage (C) d'une plaque (8) de polyméthacrylate de méthyle coulée et du matériau thermoplastique (6) par une machine de calandrage (3), **caractérisé en ce que** le procédé comprend une étape de projection (H) d'une mousse de polyuréthane (14) sur le matériau thermoplastique (6) extrudé.

2. Procédé selon la revendication précédente, **caractérisé en ce que** le procédé comprend une étape de préchauffage (A) des plaques (8) de polyméthacrylate de méthyle à une température de préchauffage (Tₚ) préalablement à un approvisionnement en plaques (8) de polyméthacrylate de méthyle de la machine de calandrage (3).

3. Procédé selon l'une quelconque des revendications précédentes, **caractérisé en ce que** le procédé comprend une étape de découpe (D) de la feuille (1) de matériau composite qui est réalisée préalablement à l'étape de projection (H).

4. Procédé selon la revendication 3, **caractérisé en ce que** le procédé comprend une étape de chauffage (E') de la feuille (1) de matériau composite à une température de chauffe (T_{c}), l'étape de chauffage (E') étant postérieure à l'étape de découpe (D) et antérieure à l'étape de projection (H).

5. Procédé selon la revendication 4, **caractérisé en ce que** le procédé comprend une étape de thermoformage (F) de la feuille (1) de matériau composite qui est postérieure à l'étape de chauffage (E') et antérieure à l'étape de projection (H).

6. Procédé selon la revendication 4, **caractérisé en ce que** le procédé comprend une étape d'étuvage (G) de la feuille (1) de matériau composite à une température d'étuve (Tᵥ), l'étape d'étuvage (G) étant postérieure à l'étape de thermoformage (F) et antérieure à l'étape de projection (H).

7. Feuille (1) de matériau composite obtenue directement à partir du procédé selon les revendications 1 à 6, **caractérisée en ce que** la feuille (1) de matériau composite comprend une couche de matériau thermoplastique (6) extrudé qui est interposée entre une plaque (8) de polyméthacrylate de méthyle coulée et une mousse de polyuréthane (14) laquelle est obtenue par un mélange d'un polyisocyanate et d'un polyol, et que la somme d'une première épaisseur élémentaire (E1) de la plaque (8) de polyméthacrylate de méthyle et d'une deuxième épaisseur élémentaire (E2) de matériau thermoplastique (6) est inférieure à une troisième épaisseur élémentaire (E3) de la mousse de polyuréthane (14).

## Patentansprüche

1. Verfahren zur Herstellung einer Verbundmaterialfolie (1), wobei das Verfahren einen Schritt des Extrudierens (B) eines thermoplastischen Materials (6) bei einer Extrusionstemperatur (Tₑ), dann einen Schritt des Kalandrierens (C) einer Platte (8) aus gegossenem Polymethylmethacrylat und des thermoplastischen Materials (6) mittels einer Kalandriermaschine (3) umfasst, **dadurch gekennzeichnet, dass** das Verfahren einen Schritt des Aufspritzens (H) eines Polyurethanschaums (14) auf das extrudierte thermoplastische Material (6) umfasst.

2. Verfahren nach dem vorstehenden Anspruch, **dadurch gekennzeichnet, dass** das Verfahren einen Schritt des Vorwärmens (A) der Platten (8) aus Polymethylmethacrylat auf einer Vorwärmtemperatur (Tₚ) vor dem Zuführen von Platten (8) aus Polymethylmethacrylat von der Kalandriermaschine (3) umfasst.

3. Verfahren nach einem der vorstehenden Ansprüche, **dadurch gekennzeichnet, dass** das Verfahren einen Schritt (D) umfasst, in dem die Folie (1) aus Verbundmaterial zerschnitten wird, der vor dem Aufspritzschritt (H) durchgeführt wird.

4. Verfahren nach Anspruch 3, **dadurch gekennzeichnet, dass** das Verfahren einen Schritt des Erhitzens (E') der Folie (1) aus Verbundmaterial auf eine Heiztemperatur (T_{c}) umfasst, wobei der Erhitzungsschritt (E') nach dem Schneidschritt (D) und vor dem Auspritzschritt (H) erfolgt.

5. Verfahren nach Anspruch 4, **dadurch gekennzeichnet, dass** das Verfahren einen Thermoformschritt (F) der Folie (1) aus Verbundmaterial umfasst, der auf den Erhitzungsschritt (H) folgt und dem Aufspritzschritt (H) vorausgeht.

6. Verfahren nach Anspruch 4, **dadurch gekennzeichnet, dass** das Verfahren einen Schritt des Trocknens (G) der Folie (1) aus Verbundmaterial bei einer Ofentemperatur (Tᵥ) umfasst, wobei der Trocknungsschritt (G) nach dem Thermoformschritt (F) und vor dem Aufspritzschritt (H) erfolgt.

7. Folie (1) aus Verbundmaterial, die direkt durch das Verfahren nach den Ansprüchen 1 bis 6 erhalten wird, **dadurch gekennzeichnet, dass** die Folie (1) aus Verbundmaterial eine Schicht aus extrudiertem thermoplastischen Material (6) umfasst, die zwischen einer Platte (8) aus gegossenem Polymethylmethacrylat und einem Polyurethanschaum (14) angeordnet ist, der aus einem Gemisch aus einem Polyisocyanat und einem Polyol gewonnen wird, und dass die Summe einer ersten Elementardicke (E1) der Platte (8) aus Polymethylmethacrylat und einer zweiten Elementardicke (E2) des Thermoplastmaterials (6) geringer ist als eine dritte Elementardicke (E3) des Polyurethanschaums (14).

## Claims

1. Method for producing a sheet (1) of composite material, the method comprising an extrusion step (B) of a thermoplastic material (6) at an extrusion temperature (Tₑ), followed by a calendaring step (C) of a plate of cast polymethyl methacrylate (8) and of the thermoplastic material (6) by a calendaring machine (3), **characterized in that** the method comprises a projection step (H) of a polyurethane foam (14) onto the extruded thermoplastic material (6).

2. Method according to the foregoing claim, **characterized in that** the method comprises a preheating step (A) of the polymethyl methacrylate plates (8) at a preheating temperature (Tp) prior to supplying the calendaring machine (3) with polymethyl methacrylate plates (8).

3. Method according to any one of the foregoing claims, **characterized in that** the method comprises a slicing step (D) of the composite material sheet which is performed prior to the projection step (H).

4. Method according to claim 3, **characterized in that** the method comprises a heating step (E') of the composite material sheet (1) at a heating temperature (T_{c}), the heating step (E') being subsequent to the slicing step (D) and prior to the projection step (H).

5. Method according to claim 4, **characterized in that** the method comprises a thermoforming step (F) of the composite material sheet (1) which is subsequent to the heating step (E') and prior to the projection step (H).

6. Method according to claim 4, **characterized in that** the method comprises a heat curing step (G) of the composite material sheet (1) at a heat curing temperature (Tv), the heat curing step (G) being subsequent to the thermoforming step (F) and prior to the projection step (H).

7. Composite material sheet (1) obtained directly by means of the method according to claims 1 to 6, **characterized in that** the composite material sheet (1) comprises a layer of extruded thermoplastic material (6) which is inserted between a cast polymethyl methacrylate plate (8) and a polyurethane foam (14) which is obtained by a mixture of a polyisocyanate and a polyol, and that the sum of a first elementary thickness (E1) of the polymethyl methacrylate plate (8) and of a second elementary thickness (E2) of thermoplastic material (6) is smaller than a third elementary thickness (E3) of the polyurethane foam (14).
